# EUROPEAN PATENT APPLICATION

(11) **EP 4 715 337 A1**
(43) Date of publication of application: **25.03.2026**
(21) Application number: 25203921.9
(22) Date of filing: 23.09.2025
(51) Int. Cl.: G01D 11/24, G01D 21/02

(54) **SENSOR ARRANGEMENT**

(30) Priority: 24.09.2024 LU 103387
(71) Applicant: Orbisens GmbH, 12489 Berlin (DE)
(72) Inventor: LAMPING, Jens, 12489 Berlin (DE); LEHMKE, Jonas, 12489 Berlin (DE); JALBY, Nicolas Jean, 12489 Berlin (DE)
(74) Representative: Paustian & Partner Patentanwälte mbB

(57) **Abstract**

A sensor arrangement comprises at least a first module and a second module. The first module is detachably attachable to the second module. Each module has electrical contacts which are in connection with the respective other module when the first module is attached to the second module.

## Description

### FIELD

The present application relates to a sensor arrangement. In particular, the present application relates to a modular sensor arrangement. In this sensor arrangement multiple sensor modules may be attached to each other to form sensor arrangements of different configurations.

### BACKGROUND

In meteorology, environmental sensing and air pollution measurements a higher density of in-situ measurements is required to provide operational monitoring of climate conditions and air pollution levels as well as to give references for simulation models. The resulting data is also used to identify sites and evaluate climate adaption schemes and to provide early health warning for the public in case of extreme conditions.

### SUMMARY

Current measurement systems or sensors lack the ability to quickly exchange elements of the sensor arrangement for calibration, maintenance and repair due to the complexity of the system design. Furthermore, these current systems require extensive knowledge and time resources during installation and are sensible for breakage due to exposed cables and moving measurement parts.

It is the object of the present application to remedy the above mentioned deficiencies and to provide a sensor arrangement, that is easy and versatile to install and maintain. Such sensor arrangement is provided by a sensor arrangement according to the appended independent claim.

According to an aspect of the present application a sensor arrangement comprises of at least a first module and a second module. The first module is detachably attachable to the second module. Each module has electrical contacts which are in connection with the respective other module when the first module is attached to the second module. This may have the advantage that a sensor arrangement is modularly built and can be easily maintained. If for example a module needs to be re-calibrated or repaired, the respective module can be swapped with another already calibrated/working module and the sensor arrangement has the least downtime possible.

According to an aspect of the present application the first module of a sensor arrangement can be toollessly attached to the second module. This may have the advantage that installation and maintenance is facilitated. In particular, the sensor arrangement is often installed in difficult to reach places e.g. requiring the use of a ladder. In such cases a toolless attachment of the modules to each other is advantageous.

According to an aspect of the present application the first module of a sensor arrangement can be attached to the second module with a rotary movement. This may be achieved by means of a bayonet lock on the first module and the second module. This may have the advantage that installation and maintenance is facilitated.

According to an aspect of the present application the electrical contacts of a sensor arrangement are arranged in such a way that, when attached in a rotary movement, the electrical contacts of the first module are swept by the electrical contacts of the second module in a fixed sequence. In other words, if the modules are attached to each other with a rotary movement, the electrical contacts are arranged such that they get in contact with each other in a predetermined sequence, e.g. such that short circuits are avoided. The electrical contacts may be arranged at different distances to a center point of the respective module. This may have the advantage that the correct functioning of the sensor arrangement in the final locking position is ensured.

According to an aspect of the present application the first module and the second module of a sensor arrangement comprise coding structures that prevent a module other than the first and second modules from being connected to each other. In other words, the modules are hardware-coded such that only the first module and the second module fit together. The coding structures may be arranged such that the second module can only be attached to a specific end of the first module. This may have the advantage that the ease of use and operating safety is increased, and an undesired sequence/arrangement of modules is avoided.

According to an aspect of the present application the first module of a sensor arrangement is pivotably connected to a bracket. The bracket can be fixed to a e.g. pole and thus the sensor arrangement can be mounted to said pole using the bracket even if the pole is not perfectly orientated (e.g. vertically or horizontally or the bracket need to be mounted to a bend in the pole) the sensor arrangement can be adjusted to be in a desired orientation. The bracket might be a bracket having two arms which are meant to be attached to one of the modules. The bracket might comprise a ball joint such that the module the bracket is attached to is movable about said ball joint with respect to the bracket. This may have the advantage that the sensor arrangement can be used more flexible and adjusted in vertical alignment.

According to an aspect of the present application the first module and the second module of a sensor arrangement each comprise connecting structures at a first end and at a second end of each module. This may have the advantage that the modules can be attached to each other at both ends or more than two modules can be attached to each other.

According to an aspect of the present application the first module and the second module of a sensor arrangement comprise alignment indicators. The alignment indicators may be markings (e.g. paint markings) and/or physical features such as notches, grooves or protrusions. This may have the advantage that the modules are easier to attach to each other, especially in situations where access to the sensor arrangement is difficult (e.g. working on a ladder, or difficult visual conditions).

According to an aspect of the present application the alignment indicators of a sensor arrangement are located on a respective outside surface of each module. This may have the advantage that attaching the modules is facilitated.

According to an aspect of the present application a sensor arrangement further comprises at least one locking structure designed to lock the first module to the second module to form a combined double height module. In other words, if the first and second modules are attached to each other, the at least one locking structure holds the two (or more) modules together such that they cannot be moved e.g. with said rotary movement. This may have the advantage that combined modules of different sizes can be achieved.

According to an aspect of the present application the first module and/or the second module of a sensor arrangement comprises a shell and an insert. The insert being attached to the shell. The shell comprises the connecting structures. The shell at least partially surrounds the insert. The insert may comprise the sensing components. The insert may comprise the coding structure. The insert may comprise the electrical contacts. The shell may comprise at least one sealing at one of its ends. This may have the advantage that the shell can be the same for different types of sensors being implemented by different inserts.

According to an aspect of the present application the connecting structures at least partially attach the insert to the shell. This may be implemented by at least one pin that attaches the insert to the shell and also serves as part of a form fit connection between the shell of the first module and the shell of the second module (e.g. a pin of a bayonet lock). This may have the advantage that functions can be integrated.

Each of the above aspects is to be considered an invention on its own. The aspects may be freely combined with each other and each feature not described as being dependent on another feature may also be freely combined with each other.

### BRIEF DESCRIPTION OF THE FIGURES

Further advantages and features of the present disclosure will be apparent from the appended figures. The figures are of merely informing purpose and not of limiting character. The figures schematically describe embodiments of the present application. Hence, the appended figures cannot be considered limiting for e.g. the dimensions of the present disclosure.
Fig. 1 depicts a schematic and perspective view of a module.
Fig. 2 depicts the module of fig. 1 in another perspective.
Fig. 3 depicts a schematic and perspective view of a sensor arrangement with a bracket.
Fig. 4 depicts schematic and perspective view of another sensor arrangement with a bracket.
Fig. 5 depicts a schematic and perspective view cut-out view of another sensor arrangement.

It is to be noted that in the different embodiments described herein same parts/elements are numbered with same reference signs, however, the disclosure in the detailed description may be applied to all parts/elements having the regarding reference signs. Also, the directional terms / position indicating terms chosen in this description like left, right, top, bottom, up, upper, down, lower, downwards, lateral, sideward are referring to the directly described figure and may correspondingly be applied to the new position after a change in position or another depicted position in another figure. All figures are not to scale, and no indication of proportions should be taken unless specifically referred to. It is further to be noted that for a better understanding parts/elements are depicted to some extend not to scale and/or enlarged and/or down scaled.

### DETAILED DESCRIPTION OF THE EMBODIMENTS

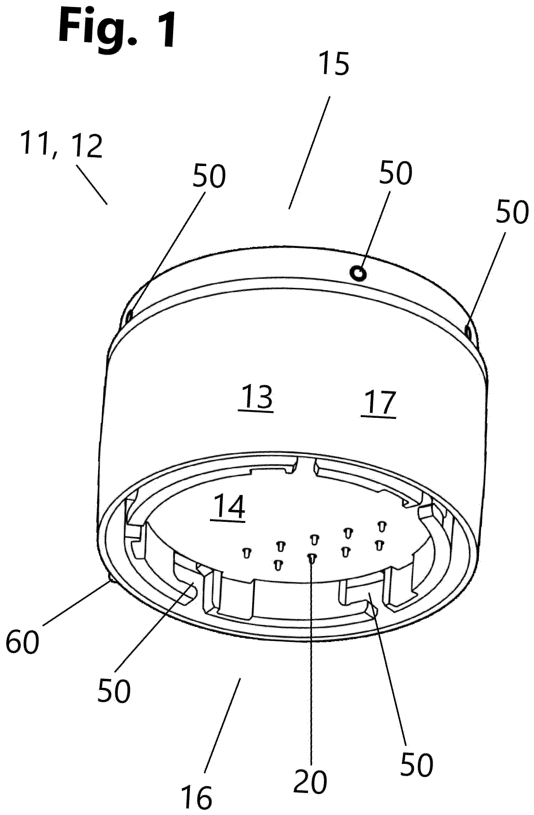

Initially referring to fig. 1 a schematic and perspective view of a first or a second module 11, 12 is given. The module comprises a shell 13 that surrounds an insert 14. The module further comprises a first end 15 and a second end 16. The insert 14 is attached to the shell 13 by means of connecting structures 50 at least at the first end 15. The connecting structures 50 at the first end 15 are pins that attach the insert 14 to the shell 13 and are designed to be engaged with the connection structures 50 at the second end 16 of the module. As can be seen the connection structures 50 at the first end 15 and the connection structures 50 at the second end 16 are designed to form a bayonet lock. The module is depicted having essentially a round/circular cross section. However, the module and in particular the shell 13 may have another shape and the first module 11 does not have to have the same shape as the second module 12 as long as they can be attached to each other. The shell 13 may have an opening to let air in, for example (not shown).

The insert 14 further comprises electrical contacts 20 which are arranged in two rows (can be only one row). The shell 13 and the insert 14 are circular. The electrical contacts 20 are at different distances from an imaginary center point of the insert. This ensures that if two modules are attached to each other (e.g. a second module to a first module) in a rotary movement, the electrical connections 20 of the modules being attached to each other contact each other in a predetermined sequence with a swiping motion such that there cannot be a short circuit while installing one module to another. An alignment indicator 60 protrudes from an outer surface 17 of the module (see also other figs.). The shell 13 and/or the insert 14 may comprise at least one coding structure 30 that prevents a module to be attached to another module with an incompatible coding structure 30. The coding structure 30 may be at least one protrusion at the respective module. The respective arrangement of the coding structure 30 determines which module can be attached to which other module. If the coding structures 30 of the modules to be connected are incompatible with each other than they block each other such that the modules cannot be attached to each other. The coding structure(s) 30 is(are) not shown in the figures.

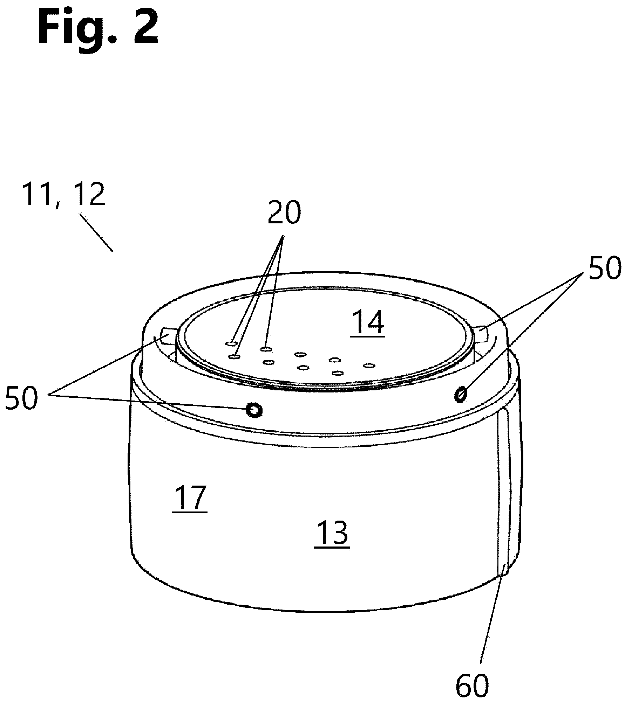

Fig. 2 depicts the module depicted in fig. 1 from another perspective. Here, the connection structures 50 at the first end 15 being pins that attach the insert 14 to the shell 13 are visible. The insert 14 is equipped with detectors that can detect desired meteorological parameters like temperature, wind speed and/or direction, particles in the air, etc. The shell 13 may be the same for various kinds of modules and only the inserts 14 would differ from each other.

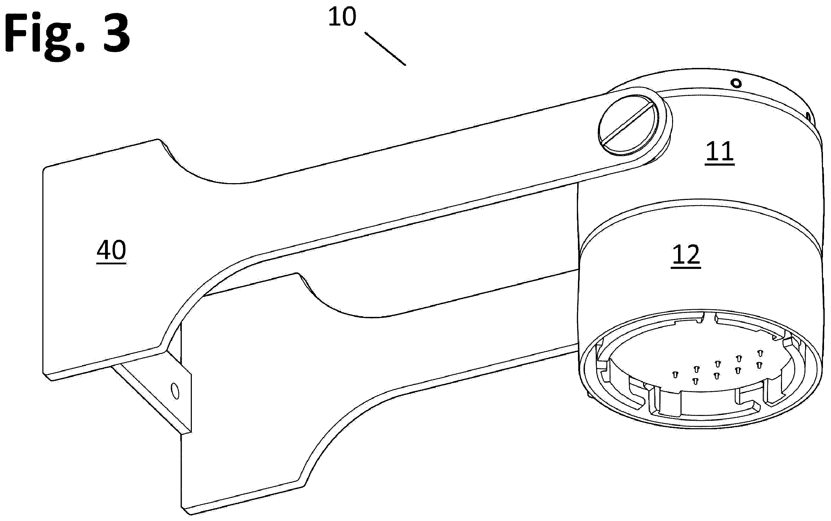

Fig. 3 depicts a sensor arrangement 10 comprising a first module 11, a second module 12 and a bracket 40. The first module 11 and the second module 12 are essentially corresponding to the modules depicted in figs. 1 and 2. The bracket 40 is attached to the first module 11 wherein the first module 11 can be pivoted with respect to the bracket by means of the depicted screw. Of course, other types of connection are possible like a ball connection between the bracket 40 and the first module 11. The first end 15 of the second module 12 is attached by the connecting structures 50 to the second end 16 of the first module 11 (not depicted/visible in fig 3).

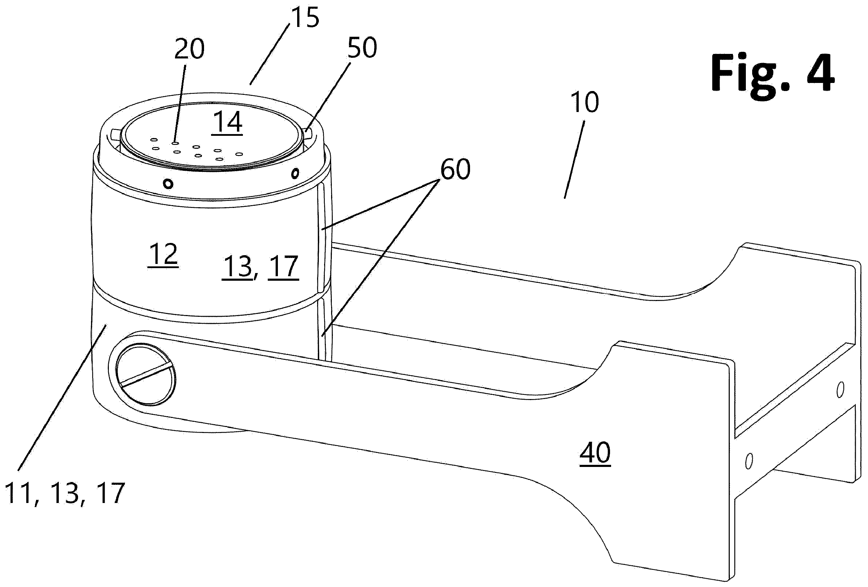

Fig. 4 depicts a variation of the sensor arrangement 10 depicted in fig. 3. Here the second end 16 of the second module 12 is attached to the first end 15 of the first module 11 and the alignment indicators 60 protruding from the respective outer surface 17 are aligned indicating that the modules are correctly attached to each other.

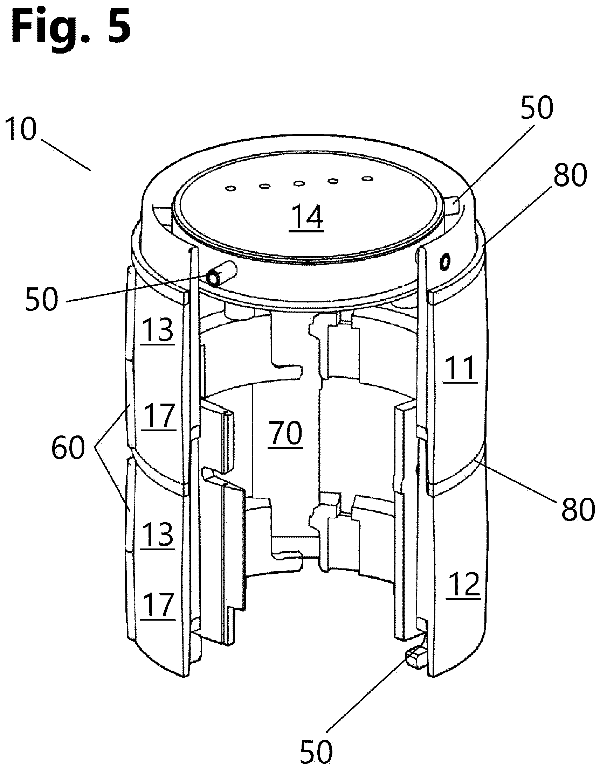

Fig. 5 depicts a perspective cut-out view of a sensor arrangement 10. Here, the second end 16 of the first module 11 is attached to the first end 15 of the second module 12 and a locking structure 70 is attached to the connected modules which prevents the modules to be moved relatively to each other. In other words, the locking structure 70 prevents the modules to be separated from each other by the rotational movement that would be necessary to loosen the bayonet lock between the modules. Here, two shells 17 are depicted to be combined in such a way. Of course, it is possible to combine more than two shells 17/modules in such way. An insert 14 may be inserted in such combined or stacked shells 17/modules that spans two (or more) shells thus providing more space for detection means. A sealing 80 is located at the first end 15 and the of the first module 11 and at the first end 15 of the second module 12, sealing the connection.

### List of reference signs

- 10: sensor arrangement
- 11: first module
- 12: second module
- 13: shell
- 14: insert
- 15: first end
- 16: second end
- 17: outside surface
- 20: electrical contacts
- 30: coding structures
- 40: bracket
- 50: connecting structure
- 60: alignment indicator
- 70: locking structure
- 80: sealing

## Claims

1. Sensor arrangement (10), comprising at least a first module (11) and a second module (12), wherein the first module is detachably attachable to the second module, and wherein each module has electrical contacts (20) which are in connection with the respective other module when the first module is attached to the second module.

2. Sensor arrangement (10) according to claim 1, wherein the first module (11) can be toollessly attached to the second module (12).

3. Sensor arrangement (10) according to claim 1 or 2, wherein the first module (11) can be attached to the second module (12) with a rotary movement.

4. Sensor arrangement (10) according to claim 3, wherein the electrical contacts (20) are arranged in such a way that, when attached in a rotary movement, the electrical contacts (20) of the first module (11) are swept by the electrical contacts (20) of the second module (12) in a fixed sequence.

5. Sensor arrangement (10) according to any one of the preceding claims, wherein the first module (11) and the second module (12) comprise coding structures (30) that prevent a module other than the first and second modules from being connected to each other.

6. Sensor arrangement (10) according to any one of the preceding claims, wherein the first module (11) is pivotably connected to a bracket (40).

7. Sensor arrangement (10) according to any one of the preceding claims, wherein the first module (11) and the second module (12) each comprise connecting structures (50) at a first end (15) and a second end (16) of each module (11, 12).

8. Sensor arrangement (10) according to any one of the preceding claims, wherein the first module (11) and the second module (12) comprise alignment indicators (60).

9. Sensor arrangement (10) according to claim 8, wherein the alignment indicators (60) are located on a respective outside surface (17) of each module.

10. Sensor arrangement (10) according to any one of the preceding claims, further comprising of at least one locking structure (70) designed to lock the first module (11) to the second module (12) to form a combined double height module.

11. Sensor arrangement (10) according to any one of claims 7 to 10, wherein the first module (11) and/or the second module (12) comprises a shell (13) and an insert (14) being attached to the shell, wherein the shell comprises the connecting structures (50), and wherein the shell at least partially surrounds the insert.

12. Sensor arrangement (10) according to claim 11, wherein the connecting structures (50) at least partially attach the insert (14) to the shell (13).
